# EUROPEAN PATENT SPECIFICATION

(11) **EP 2 936 709 B1**
(45) Date of publication and mention of the grant of the patent: **05.06.2019**
(21) Application number: 13808022.1
(22) Date of filing: 18.12.2013
(51) Int. Cl.: H04L 29/08, G06F 3/0481, H04B 13/00

(54) **ELECTRONIC DEVICES FOR, A SYSTEM FOR AND A METHOD OF CONTROLLING ONE OF THE ELECTRONIC DEVICES**
ELEKTRONISCHE VORRICHTUNG FÜR, EIN SYSTEM FÜR, UND EIN VERFAHREN ZUR STEUERUNG VON EINER DER ELEKTRONISCHEN VORRICHTUNGEN
DISPOSITIFS ÉLECTRONIQUES POUR UN SYSTÈME ET PROCÉDÉ PERMETTANT DE COMMANDER L'UN DES DISPOSITIFS ÉLECTRONIQUES

(30) Priority: 21.12.2012 EP 12198938
(43) Date of publication of application: 28.10.2015
(73) Proprietor: Koninklijke Philips N.V., 5656 AE Eindhoven (NL)
(72) Inventor: GEURTS, Lucas Jacobus Franciscus, NL-5656 AE Eindhoven (NL); DJAJADININGRAT, Johan Partomo, NL-5656 AE Eindhoven (NL)
(74) Representative: Debets, René Jozef Willem
(86) International application number: PCT/EP2013/077011
(87) International publication number: WO 2014/095947

(56) References cited:
- EP-A2- 0 843 425
- WO-A1-2006/027155
- US-A1- 2009 309 699
- US-A1- 2012 146 918
- US-B1- 6 695 207

## Description

### FIELD OF THE INVENTION

The invention relates to a first and a second electronic device which comprises an interface for using a body transmission channel as a communication channel. The invention further relates to a system for controlling the first electronic device and to a method of controlling the first electronic device.

### BACKGROUND OF THE INVENTION

For decades electronic devices are controllable with other electronic device such as a remote controller. Traditionally, control information is communicated by means of infrared light on basis of a communication protocol that has been specifically designed for the electronic device.

More recently, universal remote controllers became available. The universal remote controllers are capable of communicating control information to many different electronic devices because it has knowledge about the communication protocol of these specific electronic devices. The user has to preselect the electronic device he wants to control before he is capable of using the universal remote controller with the electronic device. The pre-selection by the user is not a very convenient solution, especially not when the universal remote controller is being used in combination with many different electronic devices.

Today several interactive electronic devices, like tablets and/or smart phones, have an infrared transceiver such that via infrared light information may be transmitted to the other electronic devices. It is known that a user may install an application on these interactive electronic devices such that the interactive electronic devices may be used as a remote controller for electronic devices which are traditionally controlled with control data that is being transmitted via an infrared based communication channel. Also on such interactive electronic device the user has to provide user input to the application about which electronic device is going to be controlled such that the application is capable of selecting the correct user interface and using the required communication protocol over the infrared light communication channel.

WO2006/027155 discloses a device for locking and/or unlocking a vehicle door by means of an electronic access authorization system. The system comprises an identifier (in a mobile phone) for sending an identification code and an identification receiver (in the vehicle). The data is transmitted via human skin.

US 6,695,207 describes a system for identity authentication based on a Personalized Authenticated Controller, i.e. a smart watch, which interacts with instrumentalities by exchanging data via the human body. Thereto the smart watch transmits identity data to such an instrumentality to authorize its use.

US2012/0146918 shows a device for controlling electronic devices using a mobile remote control device which has an interface for controlling a plurality of electronic devices.

### SUMMARY OF THE INVENTION

It is an object of the invention to provide a user friendly solution for controlling an electronic device with another device.

According to the invention a first electronic device is provided as defined in claim 6, a second electronic device is provided as defined in claim 1, and a method is provided as defined in claim 11.

A second electronic device in accordance with an aspect of the invention comprises a display, an input reception means, a second body coupled communication interface and a controller. The display is capable of presenting a user interface to a user. The input reception means receives user input from the user. The second body coupled communication interface receives identification data via a body transmission channel following a body of a user who is simultaneously with his body in the direct vicinity of the first body coupled communication interface and the second body coupled communication interface. The direct vicinity of the body with respect to the respective body coupled communication interfaces is defined as a maximum distance between the body of the user and, respectively, the first body coupled communication interface and the second body coupled communication interface at which the respective body coupled communication interfaces are capable of transmitting and/or receiving data via the body transmission channel. The controller obtains a control user interface related to the first electronic device in response to the reception of the identification data of the first electronic device. The controller also presents the obtained control user interface on the display. The controller is also configured to exchange data relating to a payment transaction, said data including at least one of account information, public keys and transaction amount.

When a user touches, in an intuitive way, the first electronic device and the second electronic device, or when the user is in the direct vicinity of the first electronic device and the second electronic device, the second electronic device is capable of obtaining the control user interface which relates to the first electronic device and presents this control user interface. Thus, the user does not have to select which type of or which specific first electronic device is going to be controlled because this information is received via the body transmission channel. Thus, when the second electronic device is used in combination with another electronic device which is capable of transmitting identification data via the body transmission channel, the second electronic device provides an intuitive solution for indicating with a touch or a direct vicinity which electronic device is going to be controlled and the second electronic device provides the control user interface and provides means to provide input in relation to the control user interface.

Optionally, the maximum distance is closer than 5 cm. Optionally, the maximum distance is closer than 2 cm. In an optional embodiment of the invention, direct vicinity means that the user touches the first body coupled communication interface and touches the second body coupled communication interface.

It is to be noted that the term "obtain" is used in the context of "obtaining the control user interface related to the first electronic device". In the following of this document several embodiments are discussed which present different forms of obtaining. Within the meaning of this document "obtaining" needs to be interpreted as a broad term which also covers the actions of selecting, downloading and/or retrieving the appropriate control user interface, and/or requesting and receiving the appropriate control user interface.

Optionally, the second electronic device is configured to transmit control data to the first electronic device after user input related to the presented control user interface has been received. The control data is based on the received user input. Thus, when the user provides input to the input reception means, the second electronic device generates the control data and transmits this to the first electronic device. Thus, the second electronic device becomes a sort of universal remote controller for the first electronic device while the user doesn't have to preselect which type of device or which specific first electronic device is going to be controlled.

Optionally, the second body coupled communication interface is configured to transmit control data via the body transmission channel following the body of the user who is simultaneously in the direct vicinity of the first body coupled communication interface and the second body coupled communication interface. Consequently, as well as the first electronic device as the second electronic device does not need to have additional communication means. The provided body coupled communication interfaces are in principle enough to communicate control information between the electronic devices.

Optionally, the controller is configured to obtain the control user interface related to the first electronic device from an internal storage of the second electronic device, from the first electronic device via the body transmission channel or another communication channel between the first electronic device and the second electronic device, or from a server via a network. Thus, optionally, the second electronic device comprises a storage means, other means to communicate with the first electronic device and/or a network connection to the network. When the control user interface, which is to control the first electronic device, is stored in the internal storage means of the second electronic device it is most efficient to obtain the stored control user interface and present this one on the display. It might be that the first electronic device has knowledge about its own control user interface and that the first electronic device is capable of providing this control user interface in a specific script or programming language to the second electronic device. The body transmission channel may be used, or, if for example another (wireless) connection is being created between the first electronic device and the second electronic device, via such another (wireless) connection. It might also be that a server is available which comprises different control user interfaces and that the second electronic device may contact such a server to download the control user interface which relates to the first electronic device. It is to be noted that such a control user interface is most probably a piece of programming code, or a script, or for example a sort of homepage in a mark-up language.

An aspect of the invention provides a first electronic device. An aspect of the invention provides a second electronic device. An aspect of the invention provides a system for controlling the first electronic device. An aspect of the invention provides a method of controlling the first electronic device. An aspect of the invention provides a computer program product. Advantageous embodiments are defined in the dependent claims.

A first electronic device in accordance with an aspect of the invention comprises a first body coupled communication interface. The first body coupled communication interface is configured to transmit identification data relating to an identity of the first electronic device via a body transmission channel following a body of a user who is in the direct vicinity of the first body coupled communication interface. The direct vicinity of the body to the first body coupled communication interface is defined as maximum distance between the body of the user and the first body coupled communication interface at which the first body coupled communication interface is capable of transmitting and/or receiving data via the body transmission channel. The first electronic device is configured to, after transmitting the identification data, to receive control data and is configured to control the operation of the first electronic device accordingly. The first electronic device is also configured to exchange data relating to a payment transaction, said data including at least one of account information, public keys and transaction amount.

Thus, when a user, is in the direct vicinity of the first body coupled communication interface of the first electronic device, identity information of the first electronic device may be transmitted via the body of the user to another device. Being in the "direct vicinity of' is a very intuitive way for a human to select or identify a specific apparatus. The "direct vicinity of' may also mean that the user touches the first body coupled communication interface and touching is an even more intuitive way of pointing to a specific first electronic device. By transmitting the identification data via the body of the user, the first electronic device provides information to such another device which prevents that the user has to preselect at the another device which device is going to be controlled. Thus, the first electronic device creates the circumstances in which the another device is capable of operating in a more user friendly way: when the user is in the direct vicinity of the first electronic device and the another device, information about the identity of the first electronic device can be transmitted to the another device and, thus, the user does not have to preselect which type or which specific device is going to be controlled with the another device.

Optionally, the maximum distance is closer than 5 cm. Optionally, the maximum distance is closer than 2 cm. In an optional embodiment of the invention, direct vicinity means that the user touches the first body coupled communication interface.

Optionally, the first body coupled communication interface is also configured to receive control data via de body transmission channel.

According to another aspect of the invention, a system is provided which comprises a first electronic device according to an aspect of the invention and which comprises a second electronic device according to an aspect of the invention. The system according to another aspect provides a user friendly way of controlling the first electronic device. A user touches the first electronic device and the second electronic device simultaneously, or is with his body simultaneously in the direct vicinity of the first electronic device and the second electronic device, and, subsequently, a control user interface being related to the first electronic device is being presented to the user on the display of the second electronic device. Touching two devices simultaneously, or being simultaneously present with the body in the direct vicinity of the two devices, is a very intuitive way of communicating to the devices that the user wants to control the first electronic device by the second electronic device.

Optionally, the second electronic device is also configured to present different types of content on the display. The controller of the second electronic device is configured to obtain the control user interface on basis of the received identification data and on basis of the type of content being presented on the display at the moment in time when the user is simultaneously in the direct vicinity of the body coupled communication interfaces of the first electronic device and of the second electronic interface. The second electronic device becomes even more user friendly when the content that is being presented on the display is taken into account in the process of obtaining and selecting the control user interface. For example, the first electronic device might be a digital photo frame which continuously presents a series of pictures in a slide show. When, for example, a photo is presented on the display of the second electronic device and the user simultaneously touches or is simultaneously in the direct vicinity of the digital photo frame and the second electronic device, a control user interface appears which comprises the control option "add current photograph to slide show". This option is not shown when no photograph is being presented on the display of the second electronic device. It prevents that specific controlling options of the control user interface are useless in a specific context and it makes the controlling of the first electronic device even more intuitive.

Optionally, the first electronic device comprises a plurality of first body coupled communication interfaces positioned close to different functional units of the first electronic device, and each first body coupled communication interface also transmits functional unit identity data being related to the identity of the functional unit with the identification data to the second electronic device. The second electronic device obtains the control user interface in dependence of the received identity data of the first electronic device and the functional unit identity data. Thus, the presented control user interface relates to a specific functional unit which is touched by the user, or to the specific functional unit which is in the direct vicinity of the user. In an example, the first electronic device is a jukebox, which comprises the function units "loudspeaker" or "CD rack" and when the user touches the loudspeaker, the presented user interface relates to volume and sound quality, and when the user touches the CD rack, the presented user interface relates to selecting the CD which is going to be played by the jukebox.

Optionally, the first electronic device comprises a first wireless transceiver for communicating with another device via a wireless transmission channel, the second electronic device comprises a second wireless transceiver for communicating with another device via the wireless transmission channel, the first body coupled communication interface is configured to transmit connection set-up data for setting up a wireless connection via the first wireless transceiver via the body transmission channel, the second body coupled communication interface is configured to receive connection set-up data via the body transmission channel, the controller of the second electronic device is configured to control the creation of a wireless connection between the second wireless transceiver and the first wireless transceiver using the received connection set-up data, and the second electronic device is configured to transmit the control data via the wireless connection. This optional embodiment provides the advantage that, once the wireless connection has been created, the user does not continuously have to touch both electronic devices to be able to control the first electronic device by the second electronic device or does not continuously have to be in the direct vicinity of both body coupled communication interfaces. Especially in situation wherein a user is not capable of providing the input to the second electronic device, while touching or being in the direct vicinity of both body coupled communication interfaces at the same moment in time, it is advantageous to communicate the control data via a separately created wireless connection. The wireless communication technique may be one of the wireless IEEE 802.x technologies, or, in another example, a Bluetooth connection. Particular embodiments of the invention are not limited to the above given wireless technologies and other wireless communication technologies may be used as well. In a home network, for example, all devices may be connected to a home wifi network and the communicated identification data comprises the IP-address of the first electronic device. If this information is known, the second electronic device may contact the first electronic device via the home wifi network using the IP-address and request the control user interface.

Optionally, the system further comprises a server for storing user interfaces of different electronic device. The server comprises a network interface for connecting to a specific network and the server is configured to provide to the second electronic device the control user interfaces related to the first electronic device in response to receiving a request for providing a control user interface for the first electronic device. The second electronic device also comprises a network interface for connecting to the specific network. Furthermore, the second electronic device is configured to send, while obtaining the control user interface related to the first electronic device, the request to the server via the specific network.

It may be advantageous to obtain control user interfaces from a central server, because the server may always have the latest and best version of the control user interface available. Furthermore, the server may store several versions which are, for example, adapted to specific capabilities of the second electronic device (e.g., which control user interface protocols the second electronic device supports). It might even be that the server is being contacted in addition to obtaining the control user interface from the internal memory of the second electronic device, for example, to check whether a newer version of the control user interface has become available.

The method according to an aspect of the invention provides the same benefits as the electronic devices and the system according to the first to an aspect of the invention and has similar embodiments with similar effects as the corresponding embodiments of the electronic devices and the system.

Optionally, the method also comprises the stages of e) receiving user input related to the presented user interface at a input reception means of the second electronic device, f) transmitting control data from the second electronic device to the first electronic device after user input has been received, the control data is based on the received user input, g) receiving the control data at the first electronic device, and h) controlling the operation of the first electronic device in accordance with the received control data.

According to an aspect of the invention, a computer program product has been provided which comprises instructions for causing a processor system to perform one of the methods of a aspect of the invention.

These and other aspects of the invention are apparent from and will be elucidated with reference to the embodiments described hereinafter.

It will be appreciated by those skilled in the art that two or more of the above-mentioned options, implementations, and/or aspects of the invention may be combined in any way deemed useful.

Modifications and variations of the devices, the system, the method, and/or of the computer program product, which correspond to the described modifications and variations of the devices and/or the system, can be carried out by a person skilled in the art on the basis of the present description.

### BRIEF DESCRIPTION OF THE DRAWINGS

In the drawings:
Fig. 1 schematically shows an embodiment of a system according to an aspect of the invention which comprises a first electronic device according to an aspect of the invention and a second electronic device according to an aspect of the invention,
Fig. 2a schematically shows another embodiment of a system,
Fig. 2b schematically shows the displaying of a user interface which might depend on the presented content on the display,
Fig. 3 schematically shows in a diagram the communication between difference devices of the system and action performed by the different devices, and
Fig. 4 schematically shows a method according to an aspect of the invention.

It should be noted that items denoted by the same reference numerals in different Figures have the same structural features and the same functions, or are the same signals. Where the function and/or structure of such an item have been explained, there is no necessity for repeated explanation thereof in the detailed description.

The Figures are purely diagrammatic and not drawn to scale. Particularly for clarity, some dimensions are exaggerated strongly.

### DETAILED DESCRIPTION OF THE EMBODIMENTS

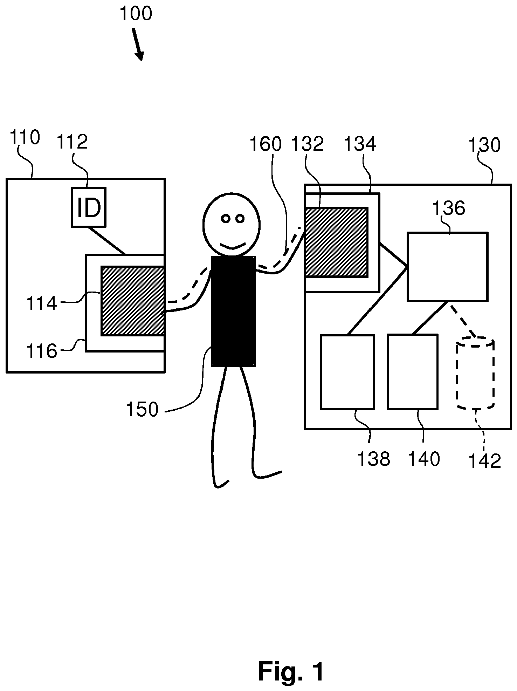

Fig. 1 schematically shows an embodiment of a system 100 according to an aspect of the invention which comprises a first electronic device 110 according to an aspect of the invention and a second electronic device 120 according to an aspect of the invention.

The first electronic device 110 comprises a body coupled communication interface 116 which comprises, for example, an electrode 114 which may be touched by a user. The first electronic device 110 also comprises an ID 112 which is data which relates to the identity of the first electronic device 110. The ID 112 is, for example, a type number indicating the type of the device, or it is a device specific serial number of the first electronic device. The body coupled communication interface 116 is configured to transmit identification data which relates to the identity of the first electronic device 110 via a body transmission channel 160 following a body of a user 150 who touches the first body coupled communication interface 116. More particular, the user 150 may touch the electrode 114 of the first body coupled communication interface 116. The identification data is based on the ID 112.

The second electronic device 130 comprises a display 138, an input reception means 140, a second body coupled communication interface 134 and a controller 136. The display 138 is capable of displaying a user interface to the user 150. The input reception means 140 is for receiving user input from the user 150. The second body coupled communication interface 134 comprises, for example, an electrode 132. The second body coupled communication interface 134 is configured to receive the identification data via the body transmission channel 160 following the body of the user 150 who touches the first body coupled communication interface 116 of the first electronic device 110 and the second body coupled communication interface 134 simultaneously. The controller 136 is configured to obtain a control user interface related to the first electronic device in response to receiving the identification data of the first electronic device. The controller 136 is also configured to present the obtained control user interface on the display 138.

The system 100 uses body coupled communication, which means that, via the body of the user 150 a body transmission channel 160 is formed through which data may be transmitted between two body coupled communication interfaces 114, 134. Details of such techniques may be found in other documents, such as, for example, US patent 6211799 or US patent 5914701. Depending on the specific implementation, the body coupled communication interfaces 116, 134 comprise an electrode 114, 132 which must be touched by the user 150. In other implementation a direct electrical contact with the body is not necessary and is, for example, capacitive coupling used as a means to transmit information via the body transmission channel 160. In the context of this document it is only important that, when a user touches two body coupled communication interfaces 116, 134 of different electronic devices 110, 130, data may be transmitted between the first electronic device 110 and the second electronic device 130 and that the data is not transmitted to other devices. Thus, the body transmission channel 160 is selective: only if there is a touch contact with a specific electronic device, this device may transmit or receive data via the body transmission channel 160.

In the system 100 of Fig. 1 the operation of the invention comprises, for example, the following steps: the user 160 touches simultaneously the first body coupled communication interface 116 and the second body coupled communication interface 134; subsequently the first body coupled communication interface 116 transmits identification data based on the ID 112 of the first electronic device 110 via the body transmission channel 160 towards the second body coupled communication interface 134; the second body coupled communication interface 134 receives the identification data and forwards the identification data to the controller 136; subsequently the controller 136uses the identification data to select and/or obtain the control user interface which may be used by the user 150 to control the first electronic device 110; thereafter, the obtained control user interface is provided to the display 138 which displays the obtained control user interface.

When the controller 136 selects and/or obtains the control user interface, the controller 136 may, for example, obtain the control user interface from an internal storage 142 of the second electronic device 130. In other embodiments, the second electronic device 130 may request the first electronic device 110, via the body transmission channel 160, to provide the control user interface which is subsequently transmitted by the first electronic device 110 towards the second electronic device 110 via the body transmission channel 160. The second electronic device 130 may also request the first electronic device 110 to provide the control user interface via another communication channel than the body transmission channel 160.

In an additional embodiment, the user may provide, via the input reception means 140, control input in relation to the displayed control user interface. Subsequently, the second electronic device 130 transmits control data, which is based on the received control input, towards the first electronic device 110. The first electronic device 110 receives the control data and uses the control data to control its operation in accordance with the received data. The transmission of the control data may also be performed via the body transmission channel 160, however, in other embodiments, other communication channels between the first electronic device 110 and the second electronic device 130 may be used. The second electronic device 130 may generate the control data on basis of information which is, for example, available in the control user interface. Or the control data may be generated on basis of predefined standards. For example, then the control user interface is a sort of HTML based webpage, the HTML webpage may comprise information which has to be sent to the first electronic device when a specific button is pressed.

The first electronic device 110 may be any electronic device which may be controlled. This includes all devices which do not provide a direct control interface to the user. For example, the first electronic device 110 may be a luminaire which comprises a dimmer and the second electronic device 130 may be used to control the emitted light intensity. For example, the first electronic device 110 may also be an amplifier which amplifies a received audio signal and provide the amplified signal to loudspeakers. In such an embodiment, the second electronic device may be used to control the sound intensity. For example, the first electronic device may also be an electronic device which has its own control buttons or has its own remote controller, such as a display or a television set. The second electronic device may be used as a universal remote controller for these devices without having the need to preselect which first electronic device is going to be controlled.

It is to be noted that in the above provided description of the embodiment of Fig. 1 it has been described that the first electronic device 110 and the second electronic device 130 are able to communicate via the body transmission channel 160 when the user 150 touches the respective body coupled communication interfaces 116, 134. However, body coupled communication is not limited to a touch of the body coupled communication interface - in specific embodiments of the body coupled communication technology, the body of the user 150 must be in the direct vicinity of the respective body coupled communication interfaces 116, 134 to transmit and receive data via the body transmission channel 160. Direct vicinity means that the body is within a maximum distance of the respective body coupled communication interfaces 116, 134. The maximum distance may be 5 centimeters, or, for example, 2 centimeters, or 1 centimeter. The detection that the user touches the respective body coupled communication interfaces 116, 134, or the detection that the user is in the direct vicinity of the respective body coupled communication interfaces 116, 134 may be performed by measuring sudden changes in specific characteristics of electrodes 114, 132, or by measuring with a specific additional element the presence of the body of the user 150. In the following of this document, at locations where "touching the electronic device" or "touching the body coupled communication interface" is described, one may also read "the body of the user is in the direct vicinity of the body coupled communication device".

In the above described embodiment of Fig. 1 and in the following embodiments, the second electronic device 130 comprises a display 138. However, it is to be noted that the invention is not limited to second electronic device 130 which comprise a display. It is only necessary that the second electronic device 130 is capable of presenting the control user interface. Presenting must be interpreted broadly: the user must be able to perceive the presented control user interface. Instead of, or in addition to presenting on a display different control options, the second electronic device may also present in an audible way the different control options.

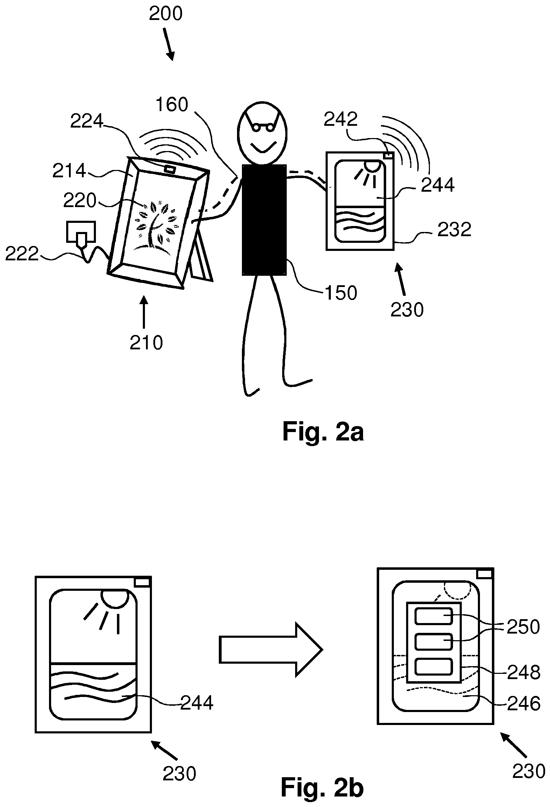

Fig. 2a schematically shows another embodiment of a system 200. The system 200 comprises an electronic photo frame 210 which comprises all elements (not shown) of the first electronic device 110 of Fig. 1, and which further comprises a display for presenting a picture, a frame 214, a power connection 222 to the mains power and a first wireless communication interface 224. The frame 214 is an integral part of the first body coupled communication interface (not shown). The frame 214, is, for example, made of a metal which forms an electrode of the first body coupled communication interface. The system 200 further comprises a tablet computer 230 which comprises all elements (not shown) of the second electronic device 130 of Fig. 1, and which further comprises a housing 232 which is partially electrically conductive, and which further comprises a second wireless communication interface 242. The housing 232 forms an integral part of the second body coupled communication interface (not shown). Because the housing is at least partially electrically conductive, the housing is a sort of electrode of the second body coupled communication interface. The display of the tablet computer 230 is also touch sensitive for receiving user input. In other words, the display and the user input reception means are integrated in a specific touch sensitive display. A processor of the tablet computer 230 may perform the tasks of the controller of the second electronic device and the internal memory or hard disk form the internal storage of the tablet computer 230.

In the system 200 of Fig. 2, not only identification data of the electronic photo frame 210 is transmitted via the body transmission channel 160 but also connection set-up data which comprises enough information for the tablet computer 230 to set up a wireless network connection between a the second wireless interface 242 and the first wireless interface 224. The connection set-up data may comprise, for example, a security key for establishing the wireless network connection, and/or information about the channels at which the first wireless interface 224 operates, and/or the network identification name of the first wireless interface 224, etc. Thus, when the user 150 simultaneously touches the frame 214 of the electronic photo frame 210 and the housing 232 of the tablet computer 230, identification data and connection set-up data are transmitted from the electronic photo frame 210 towards the tablet computer 230. The received identification data is used to select and/or obtain a control user interface which relates to the electronic photo frame 210, and the received connection set-up data is used to establish the wireless network connection via the wireless interfaces 224, 242 between the electronic photo frame 210 and the tablet computer 230. The established wireless network connection may be used to communicate information between the electronic photo frame 210 and the tablet computer 230. This information may include a request from the tablet computer 230 to the electronic photo frame 210 to provide the control user interface and/or control data to control the electronic photo frame 210. Also other data, such as pictures may be transferred via the established wireless network connection. It is advantageous to establish, in addition to the body transmission channel 160, another wireless network connection to increase the capacity of the communication channels between the two device 210, 230 and/or to allow the user to release one of his hands from the frame 214 of the electronic photo frame 210 such that he is able to provide input to the tablet computer 230 with both hands. Examples of wireless communication technologies, which may be used to communicate via the wireless network connection, are Bluetooth, Wifi (wireless communication according to one of the 802.11 protocols), Zigbee (or other wireless communication protocol according to one of the 802.15 protocols), WiMax (Broadband Wireless Access - IEEE 802.16 standard), UMTS, LTE, etc.

The system 200 of Fig. 2a provides also another specific embodiment. The display of the tablet computer 230 is, in addition to presenting an user interface, also capable of showing other content, such as a picture 244 or a video. When such other content is presented and the user touches simultaneously the electronic photo frame 210 and the tablet computer 230, the controller of the tablet computer 230 does not only use the received identification data as a condition for selecting and/or obtaining the control user interface which relates to the electronic photo frame 210, but it uses also the presented content as a selection criterion. For example, when a picture is presented on the display of the tablet computer 230, the control user interface shall include the option "add current picture to slide show of photo frame". Or when a video is presented, the control user interface shall include the option "add current frame of video to slide show photo frame", or when the electronic photo frame 210 is also capable of presenting video's, an additionally presented option in the control user interface might be "add current video to slide show of photo frame". In other words, the tablet computer 230 presents a context aware control user interface when the user touches both devices 210, 230 at the same moment in time. The tablet computer 230 might have stored several control user interfaces in its internal storage, or, when the tablet computer 230 requests from the electronic photo frame 210 or from a sever connected to a network to which the tablet computer 230 is also connected, a request to provide the control user interface includes information related to the type of information that is being displayed at the display of the tablet computer 230. Thereby the appropriate control user interface may be provided by the electronic photo frame 210 or the server. It is to be noted that the use of the content being presented on the display does always result in the presentation of a different control user interface if a different type of content is being presented, for example, when the other device is not capable of handling the specific content being presented on the display of the tablet computer 230.

In another optional embodiment, the electronic photo frame 210 provides to the tablet computer 230 information about its capabilities. This information may be send via the body transmission channel 160 or via another established (wireless) communication channel. The information of capabilities comprises, for example, whether the electronic photo frame 210 is able to store additional pictures for presentation in the slide show, whether the electronic photo frame 210 is capable of presenting video files, etc. This information may be used by the tablet computer 230 to obtain / select the appropriate control user interface. It may be used by the table computer 230 to add specific options to the control user interface or to remove specific options.

Fig. 2b schematically shows the displaying of a user interface 248 which might depend on the presented content 244 on the display of the tablet computer 230. At the left end of Fig. 2b the tablet computer 230 presents a picture 244. When, subsequently, the user 150 touches the electronic photo frame 210 and the tablet computer 230 at the same moment in time, the presented information on the display of the tablet computer 230 changes towards, for example, the situation shown at the right end of Fig. 2b. At the right end, in the background a picture 246 is presented which is similar to the picture 244, but changed, for example, to grey-levels only, or to another brightness level. At the foreground the control user interface 248 which relates to the electronic photo frame 210 is presented. The control user interface 248 comprises, for example, different buttons 250 which might be touched by the user. The button 250 are, for example, "start slide show", "switch off', "increase intensity", "decrease intensity", and, in this specific example, also a button 250 for "add current picture to slideshow". If, at the specific moment in time at which the user simultaneously touched the electronic photo frame 210 and the tablet computer 230 no specific content was presented on the display of the tablet computer, the option "add current picture to slideshow" is not present in the displayed control user interface 248.

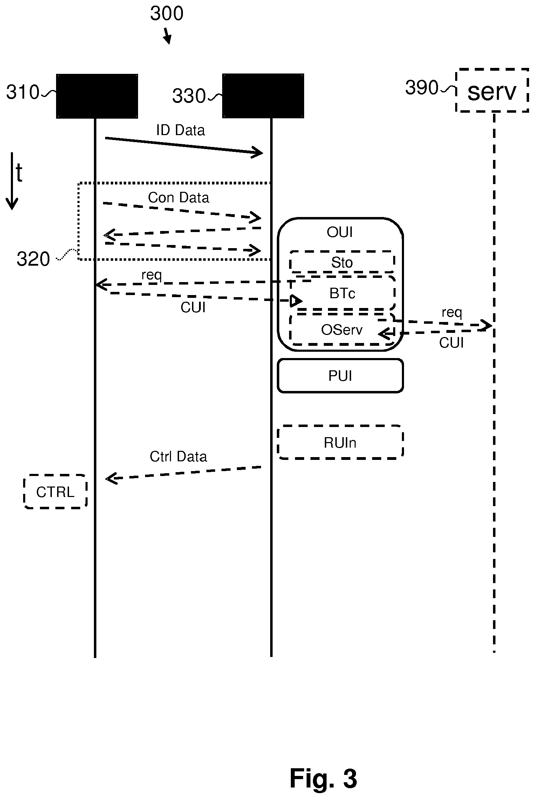

Fig. 3 schematically shows in a sort of sequence diagram 300 the communication between difference devices of the system and action performed by the different devices. The vertical direction of the diagram 300 represents the dimension of time. At the left end a first line is drawn which relates to the first electronic device 310, in the middle a second line is drawn which relates to the second electronic device 330 and at the right end a third line is drawn which relates to an optional server 390. The first electronic device 310 may be an electronic device according to the embodiments discussed in the context of Fig. 1 and Fig. 2a. The second electronic device may be an electronic device according to the embodiments discussed in the context of Fig. 1 and Fig. 2a. If in between the first line and the second line an arrow is drawn, the arrow represents communication of information between the first electronic device 310 and the second electronic device 330, or vice versa. If in between the second line and the third line an arrow is drawn, the arrow represents the communication of information between the second electronic device 330 and the server 390, or vice versa. Immediately right of the second line some actions executed by the second electronic device 330 are schematically represented by rounded boxes. If arrows or boxes are drawn with a dashed line, they are optional.

The diagram 300 starts at the moment in time (not shown) that a user touches simultaneously the first body coupled communication interface of the first electronic device 310 and the second body coupled communication interface of the second electronic device 330. This event is followed by the transmission of identification data "ID Data" from the first device 310 to the second device 330 via a body transmission channel (as discussed previously).

Optionally, the sending of the identification data "ID Data" may be followed by some communication 320 which relates to setting up a wireless network connection. The communication 320 relating to setting up a wireless network connection starts with sending connection set-up data "Con Data" from the first device 310 to the second device 330 via a body transmission channel. Subsequently, the second electronic device 330 connects the first electronic device 310 via a wireless transmission medium and the establishing of the connection may be confirmed by the first electronic device 310 via the wireless transmission medium. It is to be noted that the communication 320 which relates to setting up the wireless network connection may also be performed later in time and it is not necessary the first type of communication that follows after sending the identification data "ID data". The communication 320 may also be performed in parallel with other actions undertaken by the first electronic device 310 and/or the second electronic device 330.

After receiving the identification data "ID Data", a controller of the second electronic device 330 obtains and/or selects "OUI" on basis of the received identification data "ID Data" a control user interface which relates to the first electronic device 310. Three different embodiments of obtaining and/or selecting "OUI" are drawn in Fig. 3. In a first embodiment "Sto", the second electronic device 300 obtains the control user interface from its own internal storage. In the internal storage several control user interface may be stored and on basis of the received identification data "ID Data", the correct control user interface is selected. In a second embodiment "BTc", the second electronic device 300 obtains the control user interface via the body transmission channel from the first electronic device 310. To do so, the second electronic device 330 sends a request "req" to the first electronic device 310 which may result in a reply from the first electronic device 310 which sends its own control user interface "CUI" to the second electronic device 330. In an alternative second embodiment, the transmission of the request and the control user interface is performed via an earlier established wireless network connection. In a third embodiment "OServ", the second electronic device 300 obtains the control user interface from a server 390 via a specific network to which the second electronic device 330 and the server 390 are connected. To do so, the second electronic device 330 sends a request "req" to the server 390 to provide a control user interface being related to the first electronic device 310 and the server 390 replies by sending the correct control user interface "CUI" to the second electronic device 330.

Subsequently, the second electronic device 330 presents "PUI" the obtained / selected control user interface on its display.

Optionally, at the second electronic device 330 receives "RUIn" from the user user input which relates to the presented control user interface. The received user input is the basis for the control data "Ctrl Data" which is transmitted subsequently to the first electronic device 310. This transmission may be performed via the body transmission channel or via an earlier established wireless network connection between the two devices 310, 330. The reception of control data "Ctrl Data" at the first electronic device is followed by the action of controlling "CTRL" the operation of the first electronic device 310.

In an alternative embodiment of the system for controlling a first electronic device, the first electronic device comprises several functional units and each function unit is provided with a first body coupled communication interface. These first body coupled communication interfaces are configured to transmit, together with identity data of the first electronic device, also an identity indication of the function unit such that the second electronic device is capable of obtaining a user interface which relates to the specific function unit and to the specific first electronic device. For example, the first electronic device is a television. When the user touches the display unit, a user interface is presented to the user which relates to controllable characteristics of the display unit such as brightness, contrast, color balance, etc. When the user touches the loudspeaker unit, another user interface is presented to the user which relates to controllable characteristics of the audio, such as volume, sound quality, etc.

In an alternative embodiment of the system for controlling the first electronic device, the first electronic device is a payment unit in a shop. When the user touches the payment unit and simultaneously touches his mobile phone, at least the identification data of the payment unit is transferred to the mobile phone, and the mobile phone presents a payment user interface in the style of the shop in which the payment unit is installed. In this embodiment, the body transmission channel may be used to securely transmit other data which relates to the payment transactions, such as account information, public keys, amount to be paid, etc. The presented payment user interface allows the user to provide control input which is, for example, a confirmation that the payment terminal may deduct the payment amount from the account of the user.

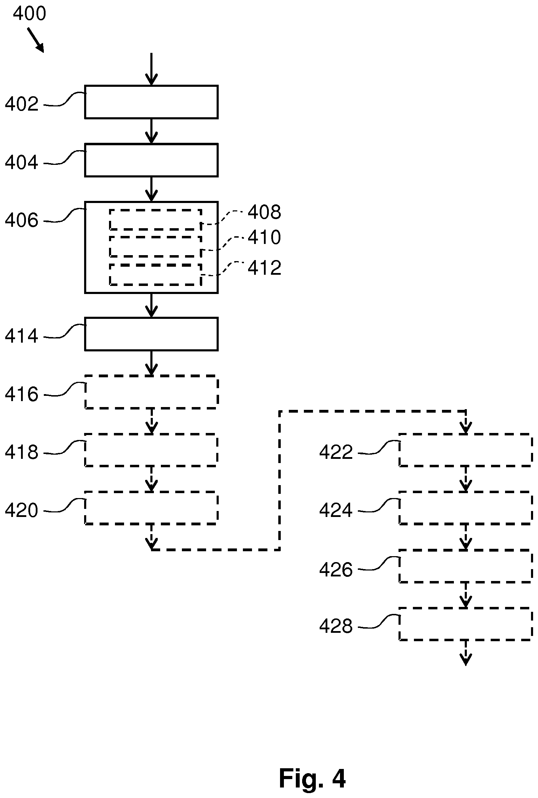

Fig. 4 schematically shows a method 400 according to an aspect of the invention. The method comprises the stages of: a) transmitting 402 identification data related to an identity of the first electronic device via a body transmission channel following a body of a user who touches a first body coupled communication interface of the first electronic device, b) receiving 404 the identification data at a second body coupled communication interface of a second electronic device via the body transmission channel following a body of a user who touches the first body coupled communication interface and the second body coupled communication interface simultaneously, c) obtaining 406 a control user interface related to the first electronic device in response to the reception of the identification data, d) presenting 414 the obtained control user interface on a display of the second electronic device.

The stage of obtaining 406 a control user interface may comprise at least one of the subsequent sub stages: i) obtaining 408 the control user interface from an internal storage medium of the second electronic device, ii) obtaining 410 the control user interface from the first electronic device via the body transmission channel or via another communication channel being present between the first electronic device and the second electronic device, and iii) obtaining 412 the control user interface from a server which is coupled to a network to which the second electronic device is also coupled.

In an optional embodiment, parallel to the stages 404, 406, 414, or after presenting 414 the control user interface, the subsequent stages of the method 400 are performed: e) transmitting 416 connection set-up data from the first electronic device via the body transmission channel, f) receiving 418 the connection set-up data at the second electronic device and g) establishing 420 a wireless network connection between the first electronic device and the second electronic device.

In an optional embodiment, the method 400 further comprises the stages of h) receiving 422 user input related to the presented user interface at an input reception means of the second electronic device, i) transmitting 424 control data from the second electronic device to the first electronic device after user input has been received, the control data is based on the received user input, j) receiving 426 the control data at the first electronic device, and k) controlling 428 the operation of the first electronic device in accordance with the received control data.

In summary, a first electronic device, a second electronic device and a system comprising the first and the second electronic device are provided. Also a method of controlling the first electronic device and a computer program for performing the method are provided. The first electronic device and the second electronic device each comprise a body coupled communication interface and when a user is in the direct vicinity of both body coupled communication interfaces, the first electronic device transmits via a body transmission channel identification data to the second electronic device. Subsequently the second electronic device obtains on basis of the received identification data a control user interface. The obtained control user interface is presented on a display of the second electronic device.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A second electronic device (130, 230, 330, dev2) comprising
- a display (138) for presenting a user interface to a user to control a first electronic device,
- an input reception means (140) for receiving user input from the user, **characterized in that** the second electronic device comprises
- a second body coupled communication interface (134) being configured to receive identification data (ID Data) via a body transmission channel (160) following a body of a user (150) who is simultaneously in the direct vicinity of a first body coupled communication interface (116) of the first electronic device (110, 210, 310, dev1) and the second body coupled communication interface (134), the direct vicinity of the body being defined as a maximum distance between the body of the user (150) and, respectively, the first body coupled communication interface (116) and the second body coupled communication interface (134) at which the respective body coupled communication interfaces (116, 134) are capable of transmitting and/or receiving data via the body transmission channel (160).
- a controller (136) being configured to obtain, in response to the reception of the identification data (ID Data) of the first electronic device (110, 210, 310, dev1), a control user interface (248) to control the first electronic device (110, 210, 310, dev1) and being configured to present the obtained control user interface (248) via the display and being configured to exchange data relating to a payment transaction, said data including at least one of account information, public keys and transaction amount.

2. A second electronic device (130, 230, 330, dev2) according to claim 1, the second electronic device being configured to transmit control data (Ctrl Data) to the first electronic device (110, 210, 310, dev1) after user input related to the presented control user interface (248) has been received, the control data (Ctrl Data) is based on the received user input.

3. A second electronic device (130, 230, 330, dev2) according to claim 2, wherein the second body coupled communication interface (134) is configured to transmit control data via the body transmission channel (160) following the body of the user (150) who is simultaneously in the direct vicinity of the first body coupled communication interface (116) of a first electronic device (110, 210, 310, dev1) and the second body coupled communication interface (134).

4. A second electronic device (130, 230, 330, dev2) according to claim 1, wherein the controller (136) is configured to obtain the control user interface (248) relating to the first electronic device (110, 210, 310, dev1) from an internal storage (142) of the second electronic device (130, 230, 330, dev2), from the first electronic device (110, 210, 310, dev1) via the body transmission channel (160) or another communication channel between the first electronic device (110, 210, 310, dev1) and the second electronic device (130, 230, 330, dev2), or from a server (390, serv) via a network.

5. A second electronic device (130, 230, 330, dev2) according to claim 1, the second electronic device (130, 230, 330, dev2) being further configured to present different types of content on the display, and wherein the controller (136) is configured to obtain the control user interface (248) on basis of the received identification data (ID Data) and on basis of the type of content being presented on the display at the moment in time when the user (150) is simultaneously in the direct vicinity of the first body coupled communication interface (116) of the first electronic device (110, 210, 310, dev1) and the second body coupled communication interface (134).

6. A first electronic device (110, 210, 310, dev1) for receiving control data to control the operation of the first electronic device,
**characterized in that** the first electronic device comprises
- a first body coupled communication interface (116) being configured to transmit identification data (ID Data) relating to an identity of the first electronic device (110, 210, 310, dev1) via a body transmission channel (160) following a body of a user (150) who is in the direct vicinity of the first body coupled communication interface (116) and a second body coupled communication interface (134) of a second electronic device being configured to receive the identification data (ID Data) via the body transmission channel (160), the direct vicinity being defined as a maximum distance between the body of the user (150) and the first body coupled communication interface (116) at which the first body coupled communication interface (116) is capable of transmitting and/or receiving data via the body transmission channel (160), and
- wherein the first electronic device is further configured to, after transmitting the identification data (ID Data), to receive control data from the second electronic device and to control the operation of the first electronic device (110, 210, 310, dev1) accordingly, and to exchange data relating to a payment transaction, said data including at least one of account information, public keys and transaction amount.

7. A first electronic device (110, 210, 310, dev1) according to claim 6, wherein the first body coupled communication interface (116) is configured to receive the control data via the body transmission channel (160).

8. A system (100, 200, 300) for controlling a first electronic device (110, 210, 310, dev1), the system comprising:
- the first electronic device (110, 210, 310, dev1) according to any one of claim 6 or 7,
- a second electronic device (130, 230, 330, dev2) according to any one of claim 1 to 5.

9. A system (100, 200, 300) according to claim 8, wherein
- the first electronic device (110, 210, 310, dev1) comprises a first wireless transceiver (224) for communicating with another device via a wireless transmission channel,
- the second electronic device (130, 230, 330, dev2) comprises a second wireless transceiver (242) for communicating with another device via the wireless transmission channel,
- the first body coupled communication interface (116) is configured to transmit connection set-up data (Con Data) for setting up a wireless connection via the body transmission channel (160),
- the second body coupled communication interface (134) is configured to receive connection set-up data (Con Data) via the body transmission channel (160),
- the controller (136) of the second electronic device (130, 230, 330, dev2) is configured to control a creation of a wireless connection between the second wireless transceiver (242) and the first wireless transceiver (224) using the received connection set-up data (Con Data),
- the second electronic device (130, 230, 330, dev2) is configured to transmit the control data (Ctrl Data) via the wireless connection.

10. A system (100, 200, 300) according to claim 8 further comprising a server (390, serv) for storing control user interfaces of different electronic devices, the server (390, serv) comprising a network interface for connecting to a specific network and the server (390, serv) being configured to provide to the second electronic device (130, 230, 330, dev2) the control user interface (248) related to the first electronic device (110, 210, 310, dev1) in response to receiving a request (req) for providing a control user interface (248) for the first electronic device (110, 210, 310, dev1), wherein the second electronic device (130, 230, 330, dev2) also comprising a network interface for connecting to the specific network and the second electronic device (130, 230, 330, dev2) is configured to send, while obtaining the control user interface (248) related to the first electronic device (110, 210, 310, dev1), the request (req) to the server via the specific network.

11. A method (400) of controlling a first electronic device from a second electronic device,
**characterized in that** the method comprises the stages of
- transmitting (402) identification data related to an identity of the first electronic device via a body transmission channel via a first body coupled communication interface of the first electronic device,
- receiving (404) the identification data at a second body coupled communication interface of the second electronic device via the body transmission channel, the body tranmission channel following a body of a user who is simultaneously in the direct vicinity of the first body coupled communication interface and the second body coupled communication interface, the direct vicinity of the body is defined as a maximum distance between the body of the user and, respectively, the first body coupled communication interface and the second body coupled communication interface at which the respective body coupled communication interfaces are capable of transmitting and/or receiving data via the body transmission channel,
- obtaining (406, OUI) a control user interface to control the first electronic device in response to the reception of the identification data,
- presenting (414, PUI) the obtained control user interface on a display of the second electronic device, and
- exchanging data relating to a payment transaction, said data including at least one of account information, public keys and transaction amount.

12. A method (400) of controlling a first electronic device according to claim 11, the method further comprises the stages of
- receiving (422, RUIn) user input related to the presented user interface at an input reception means of the second electronic device,
- transmitting (424) control data from the second electronic device to the first electronic device after user input has been received, the control data is based on the received user input,
- receiving (426) the control data at the first electronic device,
- controlling (428, CTRL) the operation of the first electronic device in accordance with the received control data.

13. A computer program product comprising instructions for causing the system of claims 8, 9 or 10 to perform the method (400) of claim 11 or to perform the method of claim 12.

## Patentansprüche

1. Zweite elektronische Vorrichtung (130, 230, 330, dev2), umfassend
- eine Anzeige (138) zum Darstellen einer Benutzerschnittstelle für einen Benutzer zum Steuern einer ersten elektronischen Vorrichtung,
- ein Eingabeempfangsmittel (140) zum Empfangen von Benutzereingabe vom Benutzer, **dadurch gekennzeichnet, dass** die zweite elektronische Vorrichtung umfasst
- eine zweite mit dem Körper gekoppelte Kommunikationsschnittstelle (134), die ausgelegt ist, um Kenndaten (ID Data) über einen Körper-Übertragungskanal (160) zu empfangen, der einem Körper eines Benutzers (150) folgt, der sich gleichzeitig in unmittelbarer Nähe zu einer ersten mit dem Körper gekoppelten Kommunikationsschnittstelle (116) der ersten elektronischen
Vorrichtung (110, 210, 310, dev1) und der zweiten mit dem Körper gekoppelten Kommunikationsschnittstelle (134) befindet, wobei unmittelbare Nähe zum Körper definiert ist als ein maximaler Abstand zwischen dem Körper des Benutzers (150) und der jeweils ersten mit dem Körper gekoppelten Kommunikationsschnittstelle (116) und der zweiten mit dem Körper gekoppelten Kommunikationsschnittstelle (134) in dem die jeweils mit dem Körper gekoppelten Kommunikationsschnittstellen (116, 134) fähig sind, Daten über den Körper-Übertragungskanal (160) zu übertragen und/oder zu empfangen,
- eine Steuerung (136), die ausgelegt ist, um als Reaktion auf den Empfang der Kenndaten (ID Data) von der ersten elektronischen Vorrichtung (110, 210, 310, dev1) eine Steuerungs-Benutzerschnittstelle (248) zum Steuern der ersten elektronischen Vorrichtung (110, 210, 310, dev1) zu erhalten, und die ausgelegt ist, um die erhaltene Steuerungs-Benutzerschnittstelle (248) über die Anzeige darzustellen, und die ausgelegt ist, um Daten im Zusammenhang mit einer Zahlungstransaktion auszutauschen, wobei die Daten mindestens eines von Kontoinformationen, öffentlichen Schlüsseln und Transaktionshöhe enthalten.

2. Zweite elektronische Vorrichtung (130, 230, 330, dev2) nach Anspruch 1, wobei die zweite elektronische Vorrichtung ausgelegt ist, um Steuerungsdaten (Ctrl Data) an die erste elektronische Vorrichtung (110, 210, 310, dev1) zu übertragen, nachdem Benutzereingabe im Zusammenhang mit der dargestellten Steuerungs-Benutzerschnittstelle (248) empfangen wurde, wobei die Steuerungsdaten (Ctrl Data) auf der empfangenen Benutzereingabe beruhen.

3. Zweite elektronische Vorrichtung (130, 230, 330, dev2) nach Anspruch 2, wobei die zweite mit dem Körper gekoppelte Kommunikationsschnittstelle (134) ausgelegt ist, um Steuerungsdaten über den Körper-Übertragungskanal (160) zu übertragen, der dem Körper des Benutzers (150) folgt, der sich gleichzeitig in unmittelbarer Nähe zur ersten mit dem Körper gekoppelten Kommunikationsschnittstelle (116) einer ersten elektronischen Vorrichtung (110, 210, 310, dev1) und der zweiten mit dem Körper gekoppelten Kommunikationsschnittstelle (134) befindet.

4. Zweite elektronische Vorrichtung (130, 230, 330, dev2) nach Anspruch 1, wobei die Steuerung (136) ausgelegt ist, um die Steuerungs-Benutzerschnittstelle (248) im Zusammenhang mit der ersten elektronischen Vorrichtung (110, 210, 310, dev1) von einem internen Speicher (142) der zweiten elektronischen Vorrichtung (130, 230, 330, dev2), von der ersten elektronischen Vorrichtung (110, 210, 310, dev1) über den Körper-Übertragungskanal (160) oder einen anderen Kommunikationskanal zwischen der ersten elektronischen Vorrichtung (110, 210, 310, dev1) und der zweiten elektronischen Vorrichtung (130, 230, 330, dev2) oder von einem Server (390, serv) über ein Netzwerk zu erhalten.

5. Zweite elektronische Vorrichtung (130, 230, 330, dev2) nach Anspruch 1, wobei die zweite elektronische Vorrichtung (130, 230, 330, dev2) weiter ausgelegt ist, um unterschiedliche Arten von Inhalt auf der Anzeige darzustellen, und wobei die Steuerung (136) ausgelegt ist, um die Steuerungs-Benutzerschnittstelle (248) auf der Grundlage der empfangenen Kenndaten (ID Data) und auf der Grundlage der Art des Inhalts, der zu dem Zeitpunkt auf der Anzeige dargestellt wird, an dem sich der Benutzer (150) gleichzeitig in unmittelbarer Nähe zur ersten mit dem Körper gekoppelten Kommunikationsschnittstelle (116) der ersten elektronischen
Vorrichtung (110, 210, 310, dev1) und der zweiten mit dem Körper gekoppelten Kommunikationsschnittstelle (134) befindet, zu erhalten.

6. Erste elektronische Vorrichtung (110, 210, 310, dev1) zum Empfangen von Steuerungsdaten zum Steuern des Betriebs der ersten elektronischen Vorrichtung,
**dadurch gekennzeichnet, dass** die erste elektronische Vorrichtung umfasst
- eine erste mit dem Körper gekoppelte Kommunikationsschnittstelle (116), die ausgelegt ist, um Kenndaten (ID Data) im Zusammenhang mit einer Identität der ersten elektronischen Vorrichtung (110, 210, 310, dev1) über einen Körper-Übertragungskanal (160) zu übertragen, der einem Körper eines Benutzers (150) folgt, der sich in unmittelbarer Nähe zur ersten mit dem Körper gekoppelten Kommunikationsschnittstelle (116) und einer zweiten mit dem Körper gekoppelten Kommunikationsschnittstelle (134) befindet, wobei die zweite elektronische Vorrichtung ausgelegt ist, um die Kenndaten (ID Data) über den Körper-Übertragungskanal (160) zu empfangen, wobei unmittelbare Nähe definiert ist als ein maximaler Abstand zwischen dem Körper des Benutzers (150) und der ersten mit dem Körper gekoppelten Kommunikationsschnittstelle (116), in dem die erste mit dem Körper gekoppelte Kommunikationsschnittstelle (116) fähig ist, Daten über den Körper-Übertragungskanal (160) zu übertragen und/oder zu empfangen, und
- wobei die erste elektronische Vorrichtung weiter ausgelegt ist, um nach Übertragen der Kenndaten (ID Data) Steuerungsdaten von der zweiten elektronischen Vorrichtung zu empfangen, und um den Betrieb der ersten elektronischen Vorrichtung (110, 210, 310, dev1) entsprechend zu steuern, und um Daten im Zusammenhang mit einer Zahlungstransaktion auszutauschen, wobei die Daten mindestens eines von Kontoinformationen, öffentlichen Schlüsseln und Transaktionshöhe enthalten.

7. Erste elektronische Vorrichtung (110, 210, 310, dev1) nach Anspruch 6, wobei die erste mit dem Körper gekoppelte Kommunikationsschnittstelle (116) ausgelegt ist, um die Steuerungsdaten über den Körper-Übertragungskanal (160) zu empfangen.

8. System (100, 200, 300) zum Steuern einer ersten elektronischen Vorrichtung (110, 210, 310, dev1), wobei das System umfasst:
- die erste elektronische Vorrichtung (110, 210, 310, dev1) nach einem der Ansprüche 6 oder 7,
- eine zweite elektronische Vorrichtung (130, 230, 330, dev2) nach einem der Ansprüche 1 bis 5.

9. System (100, 200, 300) nach Anspruch 8, wobei
- die erste elektronische Vorrichtung (110, 210, 310, dev1) einen ersten drahtlosen Sender-Empfänger (224) zum Kommunizieren mit einer anderen Vorrichtung über einen drahtlosen Übertragungskanal umfasst,
- die zweite elektronische Vorrichtung (130, 230, 330, dev2) einen zweiten drahtlosen Sender-Empfänger (242) zum Kommunizieren mit einer anderen Vorrichtung über den drahtlosen Übertragungskanal umfasst,
- die erste mit dem Körper gekoppelte Kommunikationsschnittstelle (116) ausgelegt ist, um Verbindungsaufbaudaten (Con Data) zum Aufbauen einer drahtlosen Verbindung über den Körper-Übertragungskanal (160) zu übertragen,
- die zweite mit dem Körper gekoppelte Kommunikationsschnittstelle (134) ausgelegt ist, um Verbindungsaufbaudaten (Con Data) über den Körper-Übertragungskanal (160) zu empfangen,
- die Steuerung (136) der zweiten elektronischen
Vorrichtung (130, 230, 330, dev2) ausgelegt ist, um eine Herstellung einer drahtlosen Verbindung zwischen dem zweiten drahtlosen Sender-Empfänger (242) und dem ersten drahtlosen Sender-Empfänger (224) unter Verwendung der empfangenen Verbindungsaufbaudaten (Con Data) zu steuern,
- die zweite elektronische Vorrichtung (130, 230, 330, dev2) ausgelegt ist, um die Steuerungsdaten (Ctrl Data) über die drahtlose Verbindung zu übertragen.

10. System (100, 200, 300) nach Anspruch 8, weiter umfassend einen Server (390, serv) zum Speichern von Steuerungs-Benutzerschnittstellen von unterschiedlichen elektronische Vorrichtungen, wobei der Server (390, serv) eine Netzwerksschnittstelle zum Verbinden mit einem konkreten Netzwerk umfasst, und der Server (390, serv) ausgelegt ist, um der zweiten elektronischen
Vorrichtung (130, 230, 330, dev2) die Steuerungs-Benutzerschnittstelle (248) im Zusammenhang mit der ersten elektronischen Vorrichtung (110, 210, 310, dev1) als Reaktion auf das Empfangen einer Anfrage (req) zum Bereitstellen einer Steuerungs-Benutzerschnittstelle (248) für die erste elektronische Vorrichtung (110, 210, 310, dev1) bereitzustellen, wobei die zweite elektronische Vorrichtung (130, 230, 330, dev2) auch eine Netzwerksschnittstelle zum Verbinden mit dem konkreten Netzwerk umfasst, und die zweite elektronische Vorrichtung (130, 230, 330, dev2) ausgelegt ist, um, während die Steuerungs-Benutzerschnittstelle (248) im Zusammenhang mit der ersten elektronischen Vorrichtung (110, 210, 310, dev1) erhalten wird, die Anfrage (req) an den Server über das konkrete Netzwerk zu senden.

11. Verfahren (400) zum Steuern einer ersten elektronischen Vorrichtung von einer zweiten elektronischen Vorrichtung,
**dadurch gekennzeichnet, dass** das Verfahren die Stufen umfasst
- Übertragen (402) von Kenndaten im Zusammenhang mit einer Identität der ersten elektronischen Vorrichtung über einen Körper-Übertragungskanal über eine erste mit dem Körper gekoppelte Kommunikationsschnittstelle der ersten elektronischen Vorrichtung,
- Empfangen (404) der Kenndaten an einer zweiten mit dem Körper gekoppelten Kommunikationsschnittstelle der zweiten elektronischen Vorrichtung über den Körper-Übertragungskanal, wobei der Körper-Übertragungskanal einem Körper eines Benutzers folgt, der sich gleichzeitig in unmittelbarer Nähe zur ersten mit dem Körper gekoppelten Kommunikationsschnittstelle und der zweiten mit dem Körper gekoppelten Kommunikationsschnittstelle befindet, wobei unmittelbare Nähe des Körpers definiert ist als ein maximaler Abstand zwischen dem Körper des Benutzers und der jeweils ersten mit dem Körper gekoppelten Kommunikationsschnittstelle und der zweiten mit dem Körper gekoppelten Kommunikationsschnittstelle, in dem die jeweils mit dem Körper gekoppelten Kommunikationsschnittstellen fähig sind zum Übertragen und/oder Empfangen von Daten über den Körper-Übertragungskanal,
- Erhalten (406, OUI) einer Steuerungs-Benutzerschnittstelle zum Steuern der ersten elektronischen Vorrichtung als Reaktion auf den Empfang der Kenndaten,
- Darstellen (414, PUI) der erhaltenen Steuerungs-Benutzerschnittstelle auf einer Anzeige der zweiten elektronischen Vorrichtung, und
- Austauschen von Daten im Zusammenhang mit einer Zahlungstransaktion, wobei die Daten mindestens eines von Kontoinformationen, öffentlichen Schlüsseln und Transaktionshöhe enthalten.

12. Verfahren (400) zum Steuern einer ersten elektronischen Vorrichtung nach Anspruch 11, wobei das Verfahren weiter umfasst die Stufen
- Empfangen (422, RUIn) von Benutzereingabe im Zusammenhang mit der an einem Eingabeempfangsmittel der zweiten elektronischen Vorrichtung dargestellten Benutzerschnittstelle,
- Übertragen (424) von Steuerungsdaten von der zweiten elektronischen Vorrichtung an die erste elektronische Vorrichtung, nachdem Benutzereingabe empfangen wurde, wobei die Steuerungsdaten auf der empfangenen Benutzereingabe beruhen,
- Empfangen (426) der Steuerungsdaten an der ersten elektronischen Vorrichtung,
- Steuern (428, CTRL) des Betriebs der ersten elektronischen Vorrichtung in Übereinstimmung mit den empfangenen Steuerungsdaten.

13. Computerprogrammprodukt, umfassend Instruktionen, um zu verursachen, dass das System nach den Ansprüchen 8, 9 oder 10 das Verfahren (400) nach Anspruch 11 ausführt oder das Verfahren nach Anspruch 12 ausführt.

## Revendications

1. Second dispositif électronique (130, 230, 330, dev2) comprenant
- un affichage (138) pour présenter une interface utilisateur à un utilisateur afin de commander un premier dispositif électronique,
- un moyen de réception d'entrée (140) pour recevoir une entrée d'utilisateur de l'utilisateur, **caractérisé en ce que** le second dispositif électronique comprend
- une interface de communication (134) couplée à un second corps étant configurée pour recevoir des données d'identification (ID Data) via un canal de transmission de corps (160) suivant un corps d'un utilisateur (150) qui se trouve simultanément à proximité directe d'une interface de communication (116) couplée à un premier corps du premier dispositif électronique (110, 210, 310, dev1) et de l'interface de communication (134) couplée à un second corps, la proximité directe du corps étant définie comme une distance maximale entre le corps de l'utilisateur (150) et, respectivement, l'interface de communication (116) couplée à un premier corps, et l'interface de communication (134) couplée à un second corps au niveau desquelles les interfaces de communication couplées à un corps respectif (116, 134) sont capables de transmettre et/ou de recevoir des données via le canal de transmission de corps (160).
- un dispositif de commande (136) étant configuré pour obtenir, en réponse à la réception des données d'identification (ID Data) du premier dispositif électronique (110, 210, 310, dev1), une interface utilisateur de commande (248) pour commander le premier dispositif électronique (110, 210, 310, dev1) et étant configuré pour présenter l'interface utilisateur de commande obtenue (248) via l'affichage et étant configuré pour échanger des données relatives à une transaction de paiement, lesdites données incluant au moins l'un d'une information de compte, de clés publiques et d'un montant de transaction.

2. Second dispositif électronique (130, 230, 330, dev2) selon la revendication 1, le second dispositif électronique étant configuré pour transmettre des données de commande (Ctrl Data) au premier dispositif électronique (110, 210, 310, dev1) après réception de l'entrée d'utilisateur relative à l'interface utilisateur de commande présentée (248), les données de commande (Ctrl Data) sont basées sur l'entrée d'utilisateur reçue.

3. Second dispositif électronique (130, 230, 330, dev2) selon la revendication 2, dans lequel l'interface de communication (134) couplée à un second corps est configurée pour transmettre des données de commande via le canal de transmission de corps (160) suivant le corps de l'utilisateur (150) qui se trouve simultanément à proximité directe de l'interface de communication (116) couplée à un premier corps d'un premier dispositif électronique (110, 210, 310, dev1), et de l'interface de communication (134) couplée à un second corps.

4. Second dispositif électronique (130, 230, 330, dev2) selon la revendication 1, dans lequel le dispositif de commande (136) est configuré pour obtenir l'interface utilisateur de commande (248) relative au premier dispositif
électronique (110, 210, 310, dev1) depuis une mémoire interne (142) du second dispositif électronique (130, 230, 330, dev2), depuis le premier dispositif
électronique (110, 210, 310, dev1) via le canal de transmission de corps (160) ou un autre canal de communication entre le premier dispositif électronique (110, 210, 310, dev1) et le second dispositif électronique (130, 230, 330, dev2), ou à partir d'un serveur (390, serv) via un réseau.

5. Second dispositif électronique (130, 230, 330, dev2) selon la revendication 1, le second dispositif électronique (130, 230, 330, dev2) étant en outre configuré pour présenter différents types de contenu sur l'affichage, et dans lequel le dispositif de commande (136) est configuré pour obtenir l'interface utilisateur de commande (248) sur la base des données d'identification reçues (ID Data) et sur la base du type de contenu étant présenté sur l'affichage au moment où l'utilisateur (150) se trouve simultanément à proximité directe de l'interface de communication (116) couplée à un premier corps du premier dispositif électronique (110, 210, 310, dev1) et de l'interface de communication (134) couplée à un second corps.

6. Premier dispositif électronique (110, 210, 310, dev1) destiné à recevoir des données de commande pour commander le fonctionnement du premier dispositif électronique,
**caractérisé en ce que** le premier dispositif électronique comprend
- une interface de communication (116) couplée à un premier corps, étant configurée pour transmettre des données d'identification (ID Data) relatives à une identité du premier dispositif électronique (110, 210, 310, dev1) via un canal de transmission de corps (160) suivant un corps d'un utilisateur (150) qui se trouve simultanément à proximité directe d'une interface de communication (116) couplée à un premier corps et d'une interface de communication (134) couplée à un second corps d'un second dispositif électronique étant configuré pour recevoir des données d'identification (ID Data) via le canal de transmission de corps (160), la proximité directe étant définie comme une distance maximale entre le corps de l'utilisateur (150) et l'interface de communication (116) couplée à un premier corps à laquelle l'interface de communication (116) couplée à un premier corps est capable de transmettre et/ou recevoir des données via le canal de transmission de corps (160), et
- dans lequel le premier dispositif électronique est en outre configuré pour, après avoir transmis les données d'identification (ID Data), recevoir des données de commande du second dispositif électronique et pour commander le fonctionnement du premier dispositif électronique (110, 210, 310, dev1) en conséquence, et pour échanger des données relatives à une transaction de paiement, lesdites données incluant au moins l'un d'une information de compte, de clés publiques et d'un montant de transaction.

7. Premier dispositif électronique (110, 210, 310, dev1) selon la revendication 6, dans lequel l'interface de communication (116) couplée à un premier corps est configurée pour recevoir les données de commande via le canal de transmission de corps (160).

8. Système (100, 200, 300) pour commander un premier dispositif électronique (110, 210, 310, dev1) le système comprenant :
- le premier dispositif électronique (110, 210, 310, dev1) selon l'une quelconque des revendications 6 ou 7,
- un second dispositif électronique (130, 230, 330, dev2) selon l'une quelconque des revendications 1 à 5.

9. Système (100, 200, 300) selon la revendication 8, dans lequel
- le premier dispositif électronique (110, 210, 310, dev1) comprend un premier émetteur-récepteur sans fil (224) pour communiquer avec un autre dispositif via un canal de transmission sans fil,
- le second dispositif électronique (130, 230, 330, dev2) comprend un second émetteur-récepteur sans fil (242) pour communiquer avec un autre dispositif via le canal de transmission sans fil,
- l'interface de communication (116) couplée à un premier corps est configurée pour transmettre des données d'établissement de connexion (Con Data) pour établir une connexion sans fil via le canal de transmission de corps (160),
- l'interface de communication (134) couplée à un second corps est configurée pour recevoir des données d'établissement de connexion (Con Data) via le canal de transmission de corps (160),
- le dispositif de commande (136) du second dispositif électronique (130, 230, 330, dev2) est configuré pour commander une création d'une connexion sans fil entre le second émetteur-récepteur sans fil (242) et le premier émetteur-récepteur sans fil (224) à l'aide des données d'établissement de connexion reçues (Con Data)
- le second dispositif électronique (130, 230, 330, dev2) est configuré pour transmettre les données de commande (Ctrl Data) via la connexion sans fil.

10. Système (100, 200, 300) selon la revendication 8, comprenant en outre un serveur (390, serv) pour stocker des interfaces utilisateur de commande de différents dispositifs électroniques, le serveur (390, serv) comprenant une interface réseau pour se connecter à un réseau spécifique et le serveur (390, serv) étant configuré pour fournir au second dispositif électronique (130, 230, 330, dev2) l'interface utilisateur de commande (248) associée au premier dispositif électronique (110, 210, 310, dev1) en réponse à la réception d'une requête (req) pour fournir une interface utilisateur de commande (248) pour le premier dispositif électronique (110, 210, 310, dev1), dans lequel le second dispositif électronique (130, 230, 330, dev2) comprend également une interface réseau pour une connexion au réseau spécifique et le second dispositif électronique (130, 230, 330, dev2) est configuré pour envoyer, tout en obtenant l'interface utilisateur de commande (248) associée au premier dispositif
électronique (110, 210, 310, dev1), la requête (req) au serveur via le réseau spécifique.

11. Procédé (400) de commande d'un premier dispositif électronique à partir d'un second dispositif électronique,
**caractérisé en ce que** le procédé comprend les étapes consistant à
- transmettre (402) des données d'identification relatives à une identité du premier dispositif électronique via un canal de transmission de corps via une interface de communication couplée à un premier corps du premier dispositif électronique,
- recevoir (404) les données d'identification au niveau d'une interface de communication couplée à un second corps du second dispositif électronique via le canal de transmission de corps, le canal de transmission de corps suivant un corps d'un utilisateur qui se trouve simultanément à proximité directe de l'interface de communication couplée au premier corps et l'interface de communication couplée à un second corps, la proximité directe du corps est définie comme une distance maximale entre le corps de l'utilisateur et, respectivement, l'interface de communication couplée à un premier corps et l'interface de communication couplée à un second corps à laquelle les interfaces de communication couplées à un corps respectif sont capables de transmettre et/ou recevoir des données via le canal de transmission de corps,
- obtenir (406, OUI) une interface utilisateur de commande pour commander le premier dispositif électronique en réponse à la réception des données d'identification,
- présenter (414, PUI) l'interface utilisateur de commande obtenue sur un affichage du second dispositif électronique, et
- échanger des données relatives à une transaction de paiement, lesdites données comprenant au moins l'un d'une information de compte, de clés publiques et d'un montant de transaction.

12. Procédé (400) de commande d'un premier dispositif électronique selon la revendication 11, le procédé comprenant en outre les étapes consistant à
- recevoir (422, RUIn) une entrée d'utilisateur relative à l'interface utilisateur présentée sur un moyen de réception d'entrée du second dispositif électronique,
- transmettre (424) des données de commande du second dispositif électronique au premier dispositif électronique après la réception d'une entrée d'utilisateur, les données de commande étant basées sur l'entrée utilisateur reçue,
- recevoir (426) les données de commande au niveau du premier dispositif électronique,
- commander (428, CTRL) le fonctionnement du premier dispositif électronique en fonction des données de commande reçues.

13. Produit de programme informatique comprenant des instructions pour amener le système des revendications 8, 9 ou 10 à exécuter le procédé (400) de la revendication 11 ou à exécuter le procédé de la revendication 12
